# EUROPÄISCHE PATENTSCHRIFT

(11) **EP 1 009 919 B1**
(45) Veröffentlichungstag und Bekanntmachung des Hinweises auf die Patenterteilung: **10.12.2003**
(21) Anmeldenummer: 98948782.2
(22) Anmeldetag: 12.08.1998
(51) Int. Cl.: F01K 23/10

(54) **VERFAHREN ZUM BETREIBEN EINER GAS- UND DAMPFTURBINENANLAGE UND GAS- UND DAMPFTURBINENANLAGE ZUR DURCHFÜHRUNG DES VERFAHRENS**
METHOD FOR OPERATING A GAS AND STEAM TURBINE INSTALLATION AND STEAM TURBINE INSTALLATION FOR CARRYING OUT SAID METHOD
PROCEDE POUR UTILISER UNE INSTALLATION DE TURBINES A GAZ ET A VAPEUR ET INSTALLATION DE TURBINES A GAZ ET A VAPEUR POUR LA MISE EN OEUVRE DU PROCEDE

(30) Priorität: 25.08.1997 DE 19736889
(43) Veröffentlichungstag der Anmeldung: 21.06.2000
(73) Patentinhaber: SIEMENS AKTIENGESELLSCHAFT, 80333 München (DE)
(72) Erfinder: SCHMID, Erich, D-91080 Marloffstein (DE); STIERSTORFER, Helmut, D-91054 Erlangen (DE)
(86) Internationale Anmeldenummer: DE9802329
(87) Internationale Veröffentlichungsnummer: WO99010627

(56) Entgegenhaltungen:
- EP-A- 0 281 151
- EP-A- 0 400 370
- FR-A- 2 551 181
- PATENT ABSTRACTS OF JAPAN vol. 013, no. 335 (M-856), 27. Juli 1989 & JP 01 113507 A (TOSHIBA CORP), 2. Mai 1989

## Beschreibung

Die Erfindung betrifft ein Verfahren zum Betreiben einer Gas- und Dampfturbinenanlage, bei dem die im entspannten Arbeitsmittel einer zugehörigen, sowohl mit Gas als auch mit Öl als Brennstoff betreibbaren Gasturbine enthaltene Wärme zur Erzeugung von Dampf für eine zugehörige, mindestens eine Hochdruckstufe umfassende Dampfturbine genutzt wird. Sie richtet sich weiter auf eine zur Durchführung des Verfahrens besonders geeignete Gas- und Dampfturbinenanlage mit einer sowohl mit Gas als auch mit Öl als Brennstoff betreibbaren Gasturbine und mit einem der Gasturbine rauchgasseitig nachgeschalteten Abhitzedampferzeuger zur Erzeugung von Dampf für eine zugehörige, mindestens eine Hochdruckstufe umfassende Dampfturbine.

Bei einer Gas- und Dampfturbinenanlage wird die im entspannten Arbeitsmittel aus der Gasturbine enthaltene Wärme zur Erzeugung von Dampf für die Dampfturbine genutzt. Die Wärmeübertragung erfolgt in einem der Gasturbine nachgeschalteten Abhitzedampferzeuger, in dem die Heizflächen in Form von Rohren oder Rohrbündeln angeordnet sind. Diese wiederum sind in den Wasser-Dampf-Kreislauf der Dampfturbine geschaltet. Der Wasser-Dampf-Kreislauf umfaßt eine oder mehrere, beispielsweise zwei oder drei, Druckstufen, wobei jede Druckstufe üblicherweise eine Vorwärm-Heizfläche (Economizer), eine Verdampfer-Heizfläche und eine Überhitzer-Heizfläche aufweist. Mit einer derartigen, z.B. aus der EP 0 148 973 B1 bekannten, Gas- und Dampfturbinenanlage wird je nach den im Wasser-Dampf-Kreislauf der Dampfturbine herrschenden Druckverhältnissen ein thermodynamischer Wirkungsgrad von etwa 50% oder mehr erreicht.

Die Gasturbine einer derartigen Gas- und Dampfturbinenanlage kann für den Betrieb mit verschiedenartigen Brennstoffen ausgelegt sein. Je nach Art des der Auslegung zugrundegelegten Brennstoffs sind die Anforderungen an den der Gasturbine rauchgasseitig nachgeschalteten Abhitzedampferzeuger jedoch unterschiedlich. Beispielsweise weist Gas als Brennstoff für die Gasturbine üblicherweise eine hohe Reinheit auf, so daß im aus der Gasturbine abströmenden Rauchgas nur geringe Mengen von Verunreinigungen enthalten sind.

Im Gegensatz dazu ist bei Heizöl als Brennstoff für die Gasturbine mit Verunreinigungen im aus der Gasturbine abströmenden Rauchgas zu rechnen. Dabei kann insbesondere Schwefeldioxid (SO₂) oder Schwefeltrioxid (SO₃) auftreten, das sich nach einer Reaktion mit Wasser in Form von Schwefelsäure (H₂SO₄) auf den Heizflächen im Abhitzedampferzeuger niederschlagen und diese angreifen kann. Daher sind an den Abhitzedampferzeuger bei Verwendung von Öl als Brennstoff für die Gasturbine andere Anforderungen zu stellen als bei Verwendung von Gas als Brennstoff für die Gasturbine.

Insbesondere ist bei der Verwendung von Öl als Brennstoff für die Gasturbine darauf zu achten, daß die in den Wasser-Dampf-Kreislauf der Dampfturbine geschalteten Heizflächen und Leitungskomponenten im Inneren des Abhitzedampferzeugers eine ausreichend hohe Temperatur erreichen nämlich eine Temperatur oberhalb des Taupunkts von Schwefelsäure. Dazu wird beim Ölbetrieb der Gasturbine die Eintrittstemperatur des in den Abhitzedampferzeuger einströmenden Wassers oder Kondensats im Vergleich zum Gasbetrieb der Gasturbine angehoben und auf etwa 120° bis 130°C eingestellt.

Eine Gas- und Dampfturbinenanlage, bei der als Brennstoff für die Gasturbine Heizöl nur für eine kurze Betriebsdauer, beispielsweise für 500 bis 1.500 h/a als "Backup" zu Erdgas vorgesehen ist, wird üblicherweise vordringlich für Erdgasbetrieb der Gasturbine ausgelegt und optimiert. Um bei Heizölbetrieb der Gasturbine eine ausreichend hohe Eintrittstemperatur des in den Abhitzedampferzeuger einströmenden Kondensats sicherzustellen, kann die notwendige Wärme auf verschiedene Weise aus dem Abhitzedampferzeuger selbst entnommen werden.

Eine Möglichkeit besteht darin, einen üblicherweise vorgesehenen Kondensatvorwärmer ganz oder teilweise zu umführen und das Kondensat in einem in den Wasser-Dampf-Kreislauf geschalteten Speisewasserbehälter durch Zuführung von Niederdruck-Dampf aufzuheizen. Eine solche Methode erfordert allerdings bei geringen Dampfdrücken ein großvolumiges und u.U. mehrstufiges Heizdampfsystem im Speisewasserbehälter, was bei großen Aufheizspannen eine üblicherweise im Speisewasserbehälter stattfindende Entgasungsfunktion gefährden kann.

Um eine wirkungsvolle Entgasung des Kondensats sicherzustellen, ist die Kondensattemperatur im Speisewasserbehälter stets in einem Temperaturbereich zwischen 130° und 160°C zu halten, wobei die Aufheizspanne des Kondensats im Speisewasserbehälter möglichst klein gehalten werden soll. Dies kann beispielsweise durch eine Vorwärmung des Kondensats über einen mittels Dampf beheizten zusätzlichen Vorwärmer erfolgen.

Um dazu genügend Wärme zur Verfügung zu stellen, ist bei Zwei- oder Drei-Druck-Anlagen häufig die Entnahme von Heißwasser aus einem Hochdruck-Economizer des Abhitzedampferzeugers notwendig. Dies hat allerdings, insbesondere bei Drei-Druck-Anlagen den Nachteil, daß eine üblicherweise vorgesehene Hochdruck-Speisepumpe in ihrer Fördermenge beeinflußt werden kann, und daß der zusätzliche Kondensatvorwärmer in besonders unwirtschaftlicher Weise für den hohen Druck sowie große Temperaturdifferenzen ausgelegt werden muß.

Weiter entstehen in nachteiliger Weise bei Heizölbetrieb Drosselverluste der oder jeder Speisepumpe. Ferner führt die Entnahme von Heißwasser aus dem Hochdruck-Economizer zu einer Verminderung der Hochdruck-Dampfmenge durch eine Absenkung einer sogenannten Hochdruck-Approach-Temperatur, was wiederum zu einer Reduzierung des Anlagenwirkungsgrades führt.

Eine weitere bewährte Methode ist es, bei Ölbetrieb der Gasturbine die Kondensataufheizung im Speisewasserbehälter oder im Entgaser mit aus einer Zwischenüberhitzer-Leitung entnommenem Dampf zu unterstützen. Diese Methode ist jedoch nicht anwendbar bei Anlagen ohne Speisewasserbehälter oder ohne Entgaser.

Die genannten Konzepte der Kondensatvorwärmung bei Verwendung von Öl als Brennstoff für die Gasturbine sind im Hinblick auf die erforderlichen Komponenten und auch im Hinblick auf die Betriebsweise der Gas- und Dampfturbinenanlage aufwendig. Zudem ist der Anlagenwirkungsgrad bei Ölbetrieb der Gasturbine nur begrenzt.

Der Erfindung liegt daher die Aufgabe zugrunde, ein Verfahren zum Betreiben einer Gas- und Dampfturbinenanlage der obengenannten Art anzugeben, mit dem bei geringem apparativen und betrieblichen Aufwand unabhängig vom eingesetzten Brennstoff für die Gasturbine ein besonders hoher Anlagenwirkungsgrad erreichbar ist. Zudem soll eine zur Durchführung des Verfahrens besonders geeignete Gas- und Dampfturbinenanlage angegeben werden.

Bezüglich des Verfahrens wird die genannten Aufgabe erfindungsgemäß gelöst, indem nach einem Wechsel von Gasbetrieb auf Ölbetrieb der Gasturbine der Hochdruckstufe der Dampfturbine zuzuführendes Speisewasser in einen ersten und einen zweiten Teilstrom aufgeteilt wird, wobei lediglich einer der Teilströme vorgewärmt wird.

Die Erfindung geht von der Überlegung aus, daß die beim Ölbetrieb der Gasturbine zusätzlich erforderliche Kondensatvorwärmung mit besonders einfachen Mitteln und auf besonders einfache Weise gewährleistet ist, indem die dazu erforderliche Wärme nicht über den Wasser-Dampf-Kreislauf, sondern vielmehr über das Rauchgas aus der Gasturbine auf das Kondensat übertragen wird. Dabei kann auf die bei einer Wärmeübertragung über den Wasser-Dampf-Kreislauf erforderlichen Komponenten, wie beispielsweise Wärmetauscher, Mischvorwärmer, Dampfreduzierstationen und/oder entsprechende Rohrleitungen, verzichtet werden. Statt dessen wird beim Ölbetrieb der. Gasturbine die Wärmeentnahme aus dem Rauchgas der Gasturbine im Vergleich zum Gasbetrieb der Gasturbine an geeigneter Stelle vermindert, so daß ausreichend viel Abgaswärme zur Kondensatvorwärmung zur Verfügung steht.

Zur geeigneten Modifikation der Wärmeentnahme aus dem Rauchgas der Gasturbine ist dabei die Speisewasservorwärmung für die Hochdruckstufe der Dampfturbine vorgesehen. Bei einer als Drei-Druck-Anlage ausgebildeten Gas- und Dampfturbinenanlage kann alternativ oder zusätzlich auch eine entsprechende, betriebsartabhängige Modifikation der Speisewasservorwärmung für die Mitteldruckstufe vorgesehen sein.

In vorteilhafter Weiterbildung wird nach dem Wechsel von Gasbetrieb auf Ölbetrieb der Gasturbine der Betriebsdruck in einer Niederdruckstufe der Dampfturbine erhöht. Dadurch ist sichergestellt, daß die bei Ölbetrieb der Gasturbine aufgrund der vergleichsweise geringeren Vorwärmung des Speisewassers für die Hochdruckstufe im Rauchgas verbleibende Wärme nicht über die Niederdruck-Heizflächen an den Wasser-Dampf-Kreislauf der Dampfturbine übertragen, sondern tatsächlich im Rauchgas weitergeführt und somit zuverlässig zur Kondensatvorwärmung bereitgestellt wird.

Der Betriebsdruck in der Niederdruckstufe kann dabei derart eingestellt werden, daß die Dampfproduktion in der Niederdruckstufe zum Stillstand kommt. Zweckmäßigerweise wird der Betriebsdruck in der Niederdruckstufe der Dampfturbine jedoch derart - beispielsweise auf etwa 10 bis 15 bar - angehoben, daß in der Niederdruckstufe lediglich noch eine gewisse Mindest-Dampfproduktion zur Aufrechterhaltung der Systemfunktionen bestehen bleibt.

Für einen besonders hohen Wirkungsgrad auch in einer Übergangsphase nach einem Wechsel der Betriebsweise der Gasturbine wird das Verzweigungsverhältnis zwischen dem ersten und dem zweiten Teilstrom vorteilhafterweise in Abhängigkeit von der Temperatur des der Hochdruckstufe zuzuführenden Kondensats eingestellt. Dabei kann die Temperatur des in den Abhitzedampferzeuger einströmenden Kondensats auf besonders günstige Weise überwacht werden.

Bezüglich der Gas- und Dampfturbinenanlage wird die genannte Aufgabe erfindungsgemäß gelöst, indem einem der Hochdruckstufe der Dampfturbine zugeordneten Speisewasservorwärmer eine Umführungsleitung parallel geschaltet ist.

Eine besonders günstige Anpassung der Speisewasservorwärmung an die jeweiligen Betriebsbedingungen ist dabei ermöglicht, indem vorzugsweise in die Umführungsleitung ein in Abhängigkeit von der Temperatur des der Niederdruckstufe zuzuführenden Kondensats einstellbares Ventil geschaltet ist.

Die mit der Erfindung erzielten Vorteile bestehen insbesondere darin, daß eine beim Ölbetrieb der Gasturbine erforderliche, im Vergleich zum Gasbetrieb der Gasturbine erhöhte Wassereintrittstemperatur in den Abhitzedampferzeuger mit besonders einfachen Mittel gewährleistet ist. Die bei der dazu erforderlichen zusätzlichen Kondensatvorwärmung üblicherweise vorgesehenen aufwendigen Komponenten zur Übertragung von Wärme aus dem Wasser-Dampf-Kreislauf auf das Kondensat, beispielsweise durch Zuführung von Niederdruckdampf, können entfallen. Statt dessen ist eine ausreichende Wärmeübertragung auf das Kondensat dadurch sichergestellt, daß im Rauchgas aus der Gasturbine im Bereich der Kondensatvorwärmer noch genügend Wärme enthalten ist. Die bei Ölbetrieb der Gasturbine erforderliche zusätzliche Wärme zur Kondensatvorwärmung wird also direkt über das Rauchgas auf das Kondensat übertragen. Der dazu erforderliche bauliche und betriebliche Aufwand ist besonders gering.

Darüber hinaus können Komponenten des Wasser-Dampf-Kreislaufs, wie beispielsweise die Hochdruck-Speisewasserpumpen, vergleichsweise gering dimensioniert sein, da diese nicht für einen Umleitbetrieb bei Ölbetrieb der Gasturbine mit zusätzlicher Wasserentnahme aus dem Economizer ausgelegt sein müssen. Zudem können je nach Auslegung der Niederdruckstufe der Dampfturbine und der Kondensatpumpe Wassereintrittstemperaturen in den Abhitzedampferzeuger von bis über 130°C beherrscht werden. Somit kann praktisch das gesamte Heizölspektrum für diesen Zweck (Backup Fuel) abgedeckt werden, so daß eine Standardisierung möglich ist.

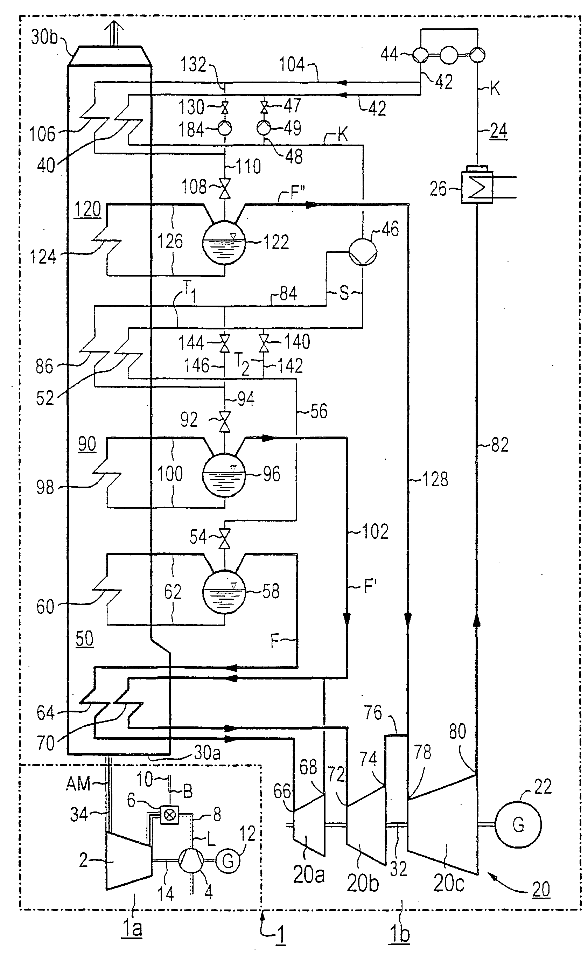

Ein Ausführungsbeispiel der Erfindung wird anhand einer Zeichnung näher erläutert. Darin zeigt die Figur schematisch eine Gas- und Dampfturbinenanlage.

Die Gas- und Dampfturbinenanlage 1 gemäß der Figur umfaßt eine Gasturbinenanlage 1a und eine Dampfturbinenanlage 1b. Die Gasturbinenanlage 1a umfaßt eine Gasturbine 2 mit angekoppeltem Luftverdichter 4 und eine der Gasturbine 2 vorgeschaltete Brennkammer 6, die an eine Frischluftleitung 8 des Luftverdichters 4 angeschlossen ist. In die Brennkammer 6 der Gasturbine 2 mündet eine Brennstoffleitung 10, über die der Brennkammer 6 wahlweise Gas oder Öl als Brennstoff B für die Gasturbine 2 zuführbar ist. Die Gasturbine 2 und der Luftverdichter 4 sowie ein Generator 12 sitzen auf einer gemeinsamen Welle 14.

Die Dampfturbinenanlage 1b umfaßt eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verläßt den Abhitzedampferzeuger 30 über dessen Ausgang 30b in Richtung auf einen nicht näher dargestellten Kamin.

Der Abhitzedampferzeuger 30 umfaßt einen ersten Kondensatvorwärmer 40, der eingangsseitig über eine Kondensatleitung 42, in die eine Kondensatpumpeneinheit 44 geschaltet ist, mit Kondensat K aus dem Kondensator 26 bespeisbar ist. Der Kondansatvorwärmer 40 ist ausgangsseitig an eine Hochdruckpumpe 46 angeschlossen. Die Kondensatleitung 42 ist zudem über eine mit einem Ventil 47 absperrbare Umwälzleitung 48, in die eine Umwälzpumpe 49 geschaltet ist, mit der Kondensatleitung 42 verbunden. Durch die Umwälzleitung 48, die Kondensatleitung 42, den Kondensatvorwärmer 40 und die Kondensatleitung 42 ist somit eine Umwälzschleife für das Kondensat K gebildet, so daß ein Speisewasserbehälter nicht erforderlich ist. Zur bedarfsweisen Umführung des Hochdruckvorwärmers 40 kann zudem die Kondensatleitung 42 über eine nicht dargestellte Umführungsleitung direkt mit der Hochdruckpumpe 46 verbunden sein.

Die Hochdruckpumpe 46 bringt das aus dem dem Kondensatvorwärmer 40 abströmende vorgewärmte Kondensat K auf ein für eine der Dampfturbine 20 zugeordneten Hochdruckstufe 50 das Wasser-Dampf-Kreislaufs 24 geeignetes Druckniveau. Das unter hohem Druck stehende Kondensat ist der Hochdruckstufe 50 als Speisewasser S über einen Speisewasservorwärmer 52 zuführbar, der ausgangsseitig über eine mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampf-Umlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlaß 66 des Hochdruckteils 20a der Dampfturbine 20 verbunden ist.

Der Dampfauslaß 68 des Hochdruckteils 20a der Dampfturbine 20 ist über einen Zwischenüberhitzer 70 an den Dampfeinlaß 72 des Mitteldruckteils 20b der Dampfturbine 20 angeschlossen. Dessen Dampfauslaß 74 ist über eine Überströmleitung 76 mit dem Dampfeinlaß 78 des Niederdruckteil 20c der Dampfturbine 20 verbunden. Der Dampfauslaß 80 des Niederdruckteils 20c der Dampfturbine 20 ist über eine Dampfleitung 82 an den Kondensator 26 angeschlossen, so daß ein geschlossener Wasser-Dampf-Kreislauf 24 entsteht.

Von der Hochdruckpumpe 46 zweigt zudem an einer Stelle, an der das Kondensat K einen mittleren Druck erreicht hat, eine Zweigleitung 84 ab. Diese ist über einen zweiten Speisewasservorwärmer 86 mit einer der Dampfturbine 20 zugeordneten Mitteldruckstufe 90 des Wasser-Dampf-Kreislaufs verbunden. Der zweite Speisewasservorwärmer 86 ist ausgangsseitig über eine mit einem Ventil 92 absperrbare Speisewasserleitung 94 an eine Mitteldrucktrommel 96 der Mitteldruckstufe 90 angeschlossen. Die Mitteldrucktrommel 96 ist mit einem im Abhitzedampferzeuger 30 angeordneten Mitteldruckverdampfer 98 zur Bildung eines Wasser-Dampf-Umlaufs verbunden. Zum Abführen von Mitteldruck-Frischdampf F' ist die Mitteldrucktrommel 96 über eine Dampfleitung 102 an den Zwischenüberhitzer und somit an den Dampfeinlaß 72 des Mitteldruckteils 20b der Dampfturbine 20 angeschlossen.

In Strömungsrichtung des Kondensats K gesehen hinter der Kondensatpumpeneinheit 44 zweigt von der Kondensatleitung 42 zudem eine weitere Kondensatleitung 104 ab, die in einen im Abhitzedampferzeuger 30 angeordneten zweiten Kondensatvorwärmer 106 mündet. Der zweite Kondensatvorwärmer 106 ist ausgangsseitig über eine mit einem Ventil 108 absperrbare Kondensatleitung 110 mit einer der Dampfturbine 20 zugeordneten Niederdruckstufe 120 des Wasser-Dampf-Kreislaufs 24 verbunden.

Die Niederdruckstufe 120 umfaßt eine Niederdrucktrommel 122, die mit einem im Abhitzedampferzeuger 30 angeordneten Niederdruckverdampfer 124 zur Bildung eines Wasser-Dampf-Umlauf 126 verbunden ist. Zum Abführen von Niederdruck-Frischdampf F'' ist die Niederdrucktrommel 122 über eine Dampfleitung 128 an die Überströmleitung 76 angeschlossen. Die Kondensatleitung 110 ist zudem über eine mit einem Ventil 130 absperrbare Umwälzleitung 132, in die eine Umwälzpumpe 184 geschaltet ist, mit der Kondensatleitung 104 verbunden. Durch die Umwälzpumpe 184 kann Kondensat K in einer durch die Umwälzleitung 132, die Kondensatleitung 104, den Kondensatvorwärmer 106 und die Kondensatleitung 110 gebildeten Umwälzschleife umgewälzt werden, so daß ein Speisewasserbehälter nicht erforderlich ist. zur bedarfsweisen Umführung des Kondensatvorwärmers 106 kann zudem die Kondensatleitung 104 über eine nicht dargestellte Umführungsleitung direkt mit der Kondensatleitung 110 verbunden sein.

Dem der Hochdruckstufe 50 zugeordneten Speisewasservorwärmer 52 ist eine mit einem Ventil 140 absperrbare Umführungsleitung 142 parallel geschaltet. Das Ventil 140 ist dabei in Abhängigkeit von der Temperatur des der Hochdruckstufe 50 oder der Mitteldruckstufe 90 zuzuführenden Kondensats K einstellbar. Dazu ist das Ventil 140 in nicht näher dargestellter Weise mit einer Reglereinheit verbunden, der ein für die Temperatur des der Niederdruckstufe 50 bzw. der Mitteldruckstufe 90 zuzuführenden Kondensats K charakteristisches Eingangssignal zuführbar ist.

Dem der Mitteldruckstufe 90 zugeordneten Speisewasservorwärmer 86 ist ebenfalls eine mit einem Ventil 144 absperrbare Umführungsleitung 146 parallel geschaltet. Das Ventil 144 ist in zum Ventil 140 analoger Weise in Abhängigkeit von der Temperatur des der Hochdruckstufe 50 oder der Mitteldruckstufe 90 zuzuführenden Kondensats K einstellbar.

Die Gasturbine 2a der Gas- und Dampfturbinenanlage 1 ist sowohl mit Gas als auch mit Heizöl als Brennstoff B betreibbar. Beim Gasbetrieb der Gasturbine 2 weist das dem Abhitzedampferzeuger 30 zugeführte Arbeitsmittel AM eine vergleichsweise hohe Reinheit auf, so daß der Wasser-Dampf-Kreislauf 24 in diesem Betriebszustand hinsichtlich seines Wirkungsgrades optimiert sein kann. In diesem Betriebszustand sind die Ventile 140, 144 geschlossen, so daß das gesamte von der Hochdruckpumpe 46 geförderte Speisewasser S durch die Speisewasservorwärmer 52 bzw. 86 geführt und dort vorgewärmt wird.

Beim Ölbetrieb der Gasturbine 2a können Verunreinigungen im dem Abhitzedampferzeuger 30 zugeführten Arbeitsmittel AM, insbesondere mit Schwefeldioxid SO₂ und mit Schwefelsäure H₂SO₄, enthalten sein. Um in diesem Betriebszustand Beschädigungen an Bauteilen innerhalb des Abhitzedampferzeugers 30 sicher zu vermeiden, werden sämtliche im Abhitzedampferzeuger 30 angeordneten Heizflächen, also insbesondere auch der Kondensatvorwärmer 40 und der Kondensatvorwärmer 106, mit einer Temperatur von mehr als dem Taupunkt von Schwefelsäure betrieben. Dazu ist im Vergleich zum Gasbetrieb der Gasturbine 2 eine erhöhe Wassereintrittstemperatur für das in den Abhitzedampferzeuger 30 einströmende Kondensat K und somit eine vergleichsweise stärkere Kondensatvorwärmung erforderlich.

Diese vergleichsweise stärkere Kondensatvorwarmung wird nicht durch Übertragung von Wärme aus dem Wasser-Dampf-Kreislauf 24 auf das Kondensat K, sondern vielmehr durch Übertragung von Wärme aus dem Arbeitsmittel AM direkt auf das Kondensat K erreicht. Dazu wird nach einem Wechsel von Gasbetrieb auf Ölbetrieb der Gasturbine 2 das der Hochdruckstufe 50 und das der Mitteldruckstufe 90 zuzuführende Speisewasser S jeweils in einen ersten Teilstrom T1 und in einen zweiten Teilstrom T2 aufteilt, wobei jeweils lediglich einer der Teilströme T1, T2 vorgewärmt wird.

Um dies zu erreichen, werden die Ventile 140 und 144 jeweils teilweise geöffnet, so daß sich der der Hochdruckstufe 50 zuzuführende Speisewasserstrom auf den Speisewasservorwärmer 52 und auf die Umführungsleitung 142 verteilt. Ebenso verteilt sich der der Mitteldruckstufe 90 zuzuführende Speisewasserstrom auf den Speisewasservorwärmer 86 und die Umführungsleitung 146. Dadurch wird dem Arbeitsmittel AM im Bereich der Speisewasservorwärmer 52, 86 im Vergleich zum Gasbetrieb der Gasturbine 2 weniger Wärme entzogen.

Um eine zuverlässige Übertragung dieser im Arbeitsmittel AM verbleibenden Wärme auf das Kondensat K zu gewährleisten, wird zudem der Betriebsdruck in der Niederdruckstufe 120 auf etwa 10 bis 15 bar erhöht. Somit ist eine Aufnahme der zusätzlich im Arbeitsmittel AM verbliebenen Wärme über die Niederdruckverdampfer 124 vermieden. Dadurch ist eine zuverlässige zusätzliche Aufheizung des Kondensats K über die Kondensatvorwärmer 40, 106 gewährleistet.

Die Gas- und Dampfturbinenanlage 1 ist bei Eintrittstemperaturen des Kondensats K in den Abhitzedampferzeuger 30 von bis über 130°C betreibbar. Somit ist ein breites Spektrum von Heizölen (Backup Fuel) für die Gasturbine 2 verwendbar, so daß auch eine Standardisierung der Gas- und Dampfturbinenanlage 1 unabhängig von Heizöl möglich ist.

## Patentansprüche

1. Verfahren zum Betreiben einer Gas- und Dampfturbinenanlage (1), bei dem die im entspannten Arbeitsmittel (AM) einer zugehörigen, sowohl mit Gas als auch mit Öl als Brennstoff betreibbaren Gasturbine (2) enthaltene Wärme zur Erzeugung von Dampf für eine zugehörige, mindestens eine Hochdruckstufe (50) umfassende Dampfturbine (20) genutzt wird, und bei dem nach einem Wechsel von Gasbetrieb auf Ölbetrieb der Gasturbine (2) der Hochdruckstufe (50) zuzuführendes Speisewasser (S) in einen ersten und einen zweiten Teilstrom (T1, T2) aufgeteilt wird, wobei lediglich einer der Teilströme (T1, T2) vorgewärmt wird.

2. Verfahren nach Anspruch 1, bei dem nach dem Wechsel von Gasbetrieb auf Ölbetrieb der Gasturbine (2) der Betriebsdruck in einer Niederdruckstufe (120) der Dampfturbine (20) erhöht wird.

3. Verfahren nach Anspruch 1 oder 2, bei dem das Verzweigungsverhältnis zwischen dem ersten Teilstrom (T1) und dem zweiten Teilstrom (T2) in Abhängigkeit von der Temperatur des der Hochdruckstufe (50) zuzuführenden Kondensats (K) eingestellt wird.

4. Gas- und Dampfturbinenanlage (1) mit einer sowohl mit Gas als auch mit Öl als Brennstoff betreibbaren Gasturbine (2) und mit einem der Gasturbine (2) rauchgasseitig nachgeschalteten Abhitzedampferzeuger (30) zur Erzeugung von Dampf für eine zugehörige, mindestens eine Niederdruckstufe (120) und eine Hochdruckstufe (50) umfassende Dampfturbine (20), bei der einem der Hochdruckstufe (50) zugeordneten Speisewasservorwärmer (52) eine Umführungsleitung (142) parallel geschaltet ist.

5. Gas- und Dampfturbinenanlage (1) nach Anspruch 4, in deren Umführungsleitung (142) ein in Abhängigkeit von der Temperatur des der Hochdruckstufe (50) zuzuführenden Kondensats (K) einstellbares Ventil (140) geschaltet ist.

## Claims

1. Method for operating a combined-cycle power plant (1), in which the heat contained in the expanded working medium (AM) of an associated gas turbine (2) operable with both gas and oil as fuel is utilized in order to generate steam for an associated steam turbine (20) comprising at least one high-pressure stage (50), and in which, after a change of the operation of the gas turbine (2) from gas to oil, feed water (S) to be supplied to the high-pressure stage (50) is divided into a first and a second part stream (T1, T2), only one of the part streams (T1, T2) being preheated.

2. Method according to Claim 1, wherein, after the change of the operation of the gas turbine (2) from gas to oil, the operating pressure in a low-pressure stage (120) of the steam turbine (20) is increased.

3. Method according to Claim 1 or 2, wherein the branching ratio between the first part stream (T1) and the second part stream (T2) is set as a function of the temperature of the condensate (K) to be supplied to the high-pressure stage (50).

4. Combined-cycle power plant (1) having a gas turbine (2) operable with both gas and oil as fuel and having a waste-heat steam generator (30) following the gas turbine (2) on the flue-gas side and intended for generating steam for an associated steam turbine (20) comprising at least one low-pressure stage (120) and one high-pressure stage (50), wherein a bypass line (142) is connected in parallel with a feed-water preheater (52) assigned to the high-pressure stage (50).

5. Combined-cycle power plant (1) according to Claim 4, in the bypass line (142) of which is connected a valve (140) capable of being set as a function of the temperature of the condensate (K) to be supplied to the high-pressure stage (50).

## Revendications

1. Procédé pour faire fonctionner une installation (1) de turbine à gaz et de turbine à vapeur, dans lequel on utilise la chaleur contenue dans le fluide (AM) de travail détendu d'une turbine (2) à gaz associée et pouvant fonctionner tant avec du gaz qu'avec du pétrole comme combustible pour produire de la vapeur pour une turbine (20) à vapeur associée comprenant au moins un étage (50) haute pression et dans lequel, après un passage d'un fonctionnement au gaz à un fonctionnement au pétrole de la turbine (2) à gaz, l'eau (5) d'alimentation allant à l'étage (50) haute pression est subdivisée en un premier et en un deuxième courant partiel (T1, T2), seul l'un des courants partiels (T1, T2) étant préchauffé.

2. Procédé suivant la revendication 1, dans lequel, après le passage d'un fonctionnement au gaz à un fonctionnement au pétrole de la turbine (2) à gaz, on élève la pression de fonctionnement dans un étage (120) basse pression de la turbine (20) à vapeur.

3. Procédé suivant la revendication 1 ou 2, dans lequel on règle le rapport de dérivation entre le premier courant partiel (T1) et le deuxième courant partiel (T2) en fonction de la température du produit condensé (K) allant à l'étage (50) haute pression.

4. Installation (1) de turbine à gaz et de turbine à vapeur comprenant une turbine (2) à gaz pouvant fonctionner tant avec du gaz qu'avec du pétrole comme combustible et un générateur de vapeur (30) à récupération de la chaleur perdue monté en aval du côté des gaz de fumée de la turbine (2) à gaz et destiné à produire de la vapeur pour une turbine (20) à vapeur associée comprenant au moins un étage (120) basse pression et un étage (50) haute pression, dans laquelle il est monté un conduit (142) de contournement à un préchauffeur (52) de l'eau d'alimentation associé à l'étage (50) haute pression.

5. Installation (1) de turbine à gaz et de turbine à vapeur suivant la revendication 4, dans le conduit (142) de contournement de laquelle est montée une vanne (140) réglable en fonction de la température du produit condensé (K) allant à l'étage (50) haute pression
